Europäisches Patentamt

European Patent Office

Office européen des brevets

(19)

(11) Numéro de publication: **0 256 922 B1**

## (12) FASCICULE DE BREVET EUROPEEN

(45) Date de publication de fascicule du brevet:
**17.07.91**

(21) Numéro de dépôt: **87401776.7**

(22) Date de dépôt: **30.07.87**

(51) Int. Cl.5: **C09K 11/06, C09D 11/00, D06P 1/00, D01F 1/10, D21H 21/48, G06K 19/14, G07D 7/00**

(54) **Procédé d'identification ou d'authentification d'un élément, tel qu'un document fiduciaire.**

(30) Priorité: **19.08.86 FR 8611878**

(43) Date de publication de la demande:
**24.02.88 Bulletin 88/08**

(45) Mention de la délivrance du brevet:
**17.07.91 Bulletin 91/29**

(84) Etats contractants désignés:
**AT BE CH DE ES FR GB GR IT LI LU NL SE**

(56) Documents cités:
**EP-A- 0 066 854**
**FR-A- 1 471 367**
**FR-A- 2 566 440**
**US-A- 3 800 142**

**OPTICS AND SPECTROSCOPY, vol. XVII, no. 1, juillet 1964, pages 37-39, American Institute of Physics, Washington, D.C., US; N.S. POLUEKTOV et al.: "Quenching of the europium luminescence in crystals of intracomplex compounds in the presence of other rare earths"**

(73) Titulaire: **PETREL**
**17, rue des Cerisiers**
**F-91090 Lisses (Essonne)(FR)**

(72) Inventeur: **Jalon, Michel**
**19, avenue du Général Leclerc**
**F-75014 Paris(FR)**

(74) Mandataire: **Portal, Gérard et al**
**Cabinet Beau de Loménie 55, rue d'Amsterdam**
**F-75008 Paris(FR)**

## Description

La présente invention a pour objet un procédé d'identification d'un élément, tel qu'un document fiduciaire.

L'utilisation de chélates fluorescents de Terres Rares a été décrite dans l'art antérieur pour protéger, des éventueilles contrefaçons, des documents fiduciaires nécessitant un haut niveau de sécurité (brevet français FR-A-1.471.367, demande de brevet européen No. 66.854, demande de brevet français No. 84.09807).

On connaît également, notamment par OPTICS AND SPECTROSCOPY, Vol. XVII, no. 1, Juillet 1964, pages 37-39, des complexes de l'europium et d'autres Terres Rares avec des composés organiques tels que la phénanthroline, l'atophan et la thénoyltrifluoroacétone.

Il est indiqué, dans ce document antérieur, que la présence dans ces complexes, des Terres Rares La, Lq, Y, Gd et Tb entraine une intensification de la luminescence de l'europium lors de l'excitation, par la lumière ultra-violette, tandis qu'une diminution de la luminescence est observée pour les autres Terres Rares et est particulièrement sensible dans le cas de Ce, Pr, Nd, Ho, Er et Tq.

Ce phénomène peut être expliqué par l'existence de transfert d'énergie intra-moléculaire.

Il a été découvert, et ceci constitue le fondement de la présente invention que, pour certains chélates de Terres Rares, les transferts d'énergie sont dépendants de la température du matériau incluant le chélate.

Pour désigner ce phénomène, le demandeur parlera, dans ce qui suit, de "chélates à transfert d'énergie assistés thermiquement".

Ainsi, conformément à la présente invention, il est proposé un procédé d'identification ou d'authentification d'un élément, tel qu'un document fiduciaire, par excitation par des rayons ultra-violets, d'un système fluorescent incorporé dans cet élément, ledit système comportant un ou plusieurs chélates d'au moins deux Terres Rares différentes, caractérisé en ce qu'il consiste à faire varier la température dudit système fluorescent de façon à provoquer un changement de la longueur d'onde de fluorescence dudit système fluorescent.

On obtient ainsi un niveau de sécurité supérieur à l'art antérieur en donnant la possibilité de faire varier les longueurs d'ondes d'émission de fluorescence des chélates de Terres Rares, et donc des matières incluant ces chélates dans des éléments, tels qu'un document fiduciaire, et ceci en fonction de la température des chélates et des documents fiduciaires les incluant.

Selon une caractéristique particulière, la variation de température précitée est effectuée dans la plage variant entre -273° C et +50° C.

Selon une autre caractéristique particulière, le procédé conforme à l'invention comporte en outre la détection qualitative et quantitative des longueurs d'onde de fluorescence dudit élément à authentifier au moyen d'un dispositif électro-optique.

L'expression "élément, tel qu'un document fiduciaire" désigne ici, les papiers de sécurité tels que billets de banque, tickets, bons, chèques, actions, valeurs, timbres, documents officiels, cartes d'identité, passeports, livrets, etc... ainsi que les cartes de crédit, de paiement, d'accès, et plus généralement tout élément ou document devant présenter un haut niveau de sécurité et susceptible d'être authentifié ultérieurement.

Les exemples suivants cités de façon non limitative feront mieux comprendre l'invention.

Exemple 1 : on prépare ainsi un chélate à transfert d'énergie assisté thermiquement : on dissout 4 moles de Benzoyltrifluoroacétone dans de l'éthanol, et ajoute 4 moles de Dimethylamine; à ce mélange réactionnel agité et chauffé, on ajoute une solution aqueuse de 0,9 mole de chlorure de Terbium et 0,1 mole de chlorure d'Europium. Le mélange précipite bientôt en flocons blancs qui sont filtrés, lavés et sechés. On dissout 50 grammes de ce chélate Terbium/Europium dans un vernis héliographique (500 grammes), et on utilise ce vernis pour imprimer un film plastique qui est ensuite découpé en fines bandes de 1mm de large et qui sont introduites dans le papier de sécurité sous formes de fils de sécurité. A température ambiante, le papier de sécurité ainsi fabriqué, a un fil de sécurité incolore en lumière du jour ou artificille, qui est fortement fluorescent dans le rouge (610-620nm) sous excitation des rayons ultra-violets (365nm).

Par contre à la température de 77° K (température de l'Azote liquide), le fil de sécurité de ce papier de sécurité, tout en restant incolore à la lumière du jour ou artificielle, présente une forte fluorescence verte typique du Terbium.

Exemple 2 : on prépare un autre chélate à transfert d'énergie assisté thermiquement en utilisant comme Terres Rares du Terbium et du Samarium; on suit la procédure de l'exemple 1, en remplaçant le Benzoyltrifluoroacétone par du Thiénoyltrifloroacétone, et le chlorure d'Europium par du chlorure de Samarium; on teint des fibres de Polyamide de 22 Dtex-3 mm en utilisant le procédé décrit dans la demande de Brevet Français N° 8409807, c'est à dire en utilisant un bain de Méthanol/eau/chélate de Terbium-Samarium.

Les fibres ainsi teintes sont essorées et sèchées, puis ajoutées à la pâte à papier et un papier de sécurité est fabriqué.

Ce papier de sécurité contient des fibres de sécurité, incolores en lumière visible, qui, sous excitation des ultra-violets, sont:

- à température ambiante, fluorescentes dans le rouge (émission typique du Samarium)
- à la température de 4° K (température de l'Hélium liquide), fluorescentes dans le vert (émission typique du Terbium).

Dans cet exemple on peut avec le même procédé de teinture remplacer les fibres de Polyamide par du fil à coudre de Polyamide et obtenir le même résultat, c'est à dire par exemple un document de sécurité dont les pages seront cousues par ce fil de Polyamide et qui présentera un changement de longueur d'onde de fluorescence en passant d'une émission rouge à une émission verte lorsqu'on abaissera la température du document de 300° K à 4° K, par exemple en le plongeant dans un bain d'Hélium liquide.

Exemple 3 : on prépare un chélate à transfert d'énergie assisté thermiquement en utilisant comme Terres Rares du Gadolinium, du Terbium et de l'Europium: en reprenant la procédure de l'exemple 1 et en mettant comme chlorure de Terres Rares, 0,8 mole de chlorure de Gadolinium, 0,19 mole de chlorure de Terbium et 0,01 mole de chlorure d'Europium, on obtient un chélate à transfert d'énergie.

10 grammes de ce chélate sont dissous dans une encre offset noire (250 gr) à polymérisation sous U.V., et cette encre est étendue sur une carte de crédit.

Cette carte de crédit ainsi imprimée est en lumière visible noire, par contre, sous excitation des U.V., elle fluoresce dans le rouge à température ambiante, et dans le vert à -30° C.

Dans cet exemple, on peut aussi remplacer cette encre offset par une encre, ou un vernis, sérigraphique.

Exemple 4 : En reprenant tel quel l'exemple 3 (chélate de Gadolinium-Terbium-Europium dissous dans une encre noire offset polymérisable sous U.V., et déposée sur une carte de crédit), on a déposé sur la même carte de crédit, à une place contigüe à la première encre, une deuxième encre noire offset identique mais comportant cette fois un chélate sans transfert d'énergie, c'est à dire, fait uniquement avec du chlorure d'Europium.

Sous excitation des U.V., à température ambiante, les 2 impressions présentent la même émission dans le rouge. Par contre en plongeant la carte de crédit dans l'Azote liquide, cette carte de crédit aura simultanément une zone émettant une fluorescence verte (celle du chélate à transfert d'énergie), et une zone émettant une fluorescence rouge (celle du chélate sans transfert d'énergie, fait avec uniquement du chlorure d'Europium).

Exemple 5 : on prépare un chélate à transfert d'énergie en utilisant comme Terres Rares du Lanthane et du Terbium; en suivant la procédure décrite dans l'exemple 1 et en utilisant comme ligand du Benzoylacétone, et comme Terres Rares 0,9 mole de chlorure de Lanthane et 0,1 mole de chlorure de Terbium, on obtient un chélate qui n'est pratiquement pas fluorescent à l'oeil nu sous excitation des U.V..

On introduit ce chélate dans des fibres de Polyamide par le procédé de teinture décrit dans l'exemple 2 et on obtient des fibres de sécurité, non colorées en lumière solaire ou artificielle, qui, sous excitation des U.V. (365 nm), sont non fluorescentes à température ambiante, mais très fluorescentes dans le vert à la température de 77° K.

En utilisant le même chélate, et en l'incorporant à un vernis héliographique qui est déposé sur un film, lui-même découpé en fils de sécurité incorporés au papier, on obtient les mêmes résultats de fluorescence.

Exemple 6 : on prépare un chélate à transfert d'énergie en utilisant comme Terres Rares du Néodyme et de l'Europium; en suivant la procédure de l'exemple 1, on utilise comme ligand du Benzoyltrifloroacétone, et comme Terres Rares 0,8 mole de chlorure de Néodyme et 0,2 mole de chlorure d'Europium.

Dans un premier vernis héliographique, on incorpore ce chélate dans les proportions données à l'exemple 1.

Dans une deuxième vernis héliographique, un incorpore un autre chélate sans transfert d'énergie, c'est à dire, constitué du même ligand mais avec uniquement du chlorure d'Europium ( 1 mole).

Sur la machine d'impression héliographique à 2 postes d'impression, on met dans le premier bac à encre le premier vernis contenant le chélate de Néodyme-Europium, et dans le second bac le second vernis contenant le chélate d'Europium.

On imprime du film de polypropylène en veillant à ce que les zones imprimées par les 2 cylindres héliographiques constituent des impressions alternées selon un rythme particulier.

Ce film imprimé est découpé en bandes qui constituent des fils de sécurité incorporés à un papier de sécurité lors de sa fabrication.

Ce papier de sécurité présente alors comme particularité, d'avoir, sous excitation des U.V.,

- à température ambiante, un fil de sécurité uniformément fluorescent dans le rouge (fluorescence typique de l'Europium dans les 2 vernis;
- à la température de 77° K, un fil de sécurité présentant en alternance et selon le rythme particulier retenu, des zones de fluorescence dans le rouge (typique de l'Europium du 2° chélate), et des zones de fluorescence dans l'"Infra-Rouge (typique du Néodyme du 1° chélate à transfert d'énergie).

Lors de l'excitation U.V., à température ambiante comme à basse température, un spectrofluorimétre, sensible au visible et à l'Infra-Rouge, est placé de façon à analyser les émissions de lumière fluorescente et leurs variations en fonction de la température du papier de sécurité. Cet appareil peut être couplé à un autre appareil ayant en mémoire le rythme particulier retenu, et capable de comparer le rythme lu, lors du défilement du papier de sécurité à authentifier, et celui mis en mémoire, et de donner ainsi une réponse positive ou négative à cette procédure automatisée d'authentification d'un papier de sécurité.

Les transferts d'énergie dépendant de la température dans les chélates de Terres Rares ont été décrits dans les exemples ci-dessus pour les Terres Rares Tb-Eu, Tb-Sm, Gd-Tb-Eu, Gd-Tb, Nd-Eu, et l'homme de l'art pourra en trouver d'autres parmi les lanthanides auxquels on associe habituellement l'Yttrium et le Thorium, et les exemples cités ne sont pas limitatifs de l'invention.

L'appareil pour révéler la fluorescence des chélates à transfert d'énergie assisté thermiquement, est dans sa version la plus simple, constitué d'une source d'excitation U.V., d'un support mobile de documents fiduciaires, d'un bac contenant un liquide à basse température. Sur cet appareil, le document fiduciaire à authentifier est présenté manuellement ou automatiquement sous une source de rayons ultra-violets, et émet donc la fluorescnce typique d'une Terre Rare, puis toujours sous excitation U.V. est plongé dans le bac réfrigéré, éventuellement transparent, et émet donc la fluorescence typique d'une deuxième Terre Rare. Ainsi authentifié, le document est ressorti du bac et un autre document subit le même test en vue de son authentification.

Dans cette version simplifiée, le contrôle d'authentification est visuel.

Dans une version plus complète de cet appareil, on peut lui adjoindre un spectrofluorimètre qui exercera un contrôle précis, qualitatif et quantitatif, des longueurs d'onde d'émission de fluorescence en fonction de la température du document à authentifier. On peut prévoir également un montage électro-optique muni des filtres optiques convenables qui detectera le changement de longueur d'ondes de fluorescence toujours en fonction de la température et affichera directement le résultat du double contrôle.

Selon le réfrigérant retenu, Hélium liquide, Azote liquide, Carboglace ou autres, le bac recepteur des documentes à authentifier pourra être ouvert et approvisionné en permanence, ou fermé.

On peut aussi remplacer le bac réfrigéré par un jet de liquide

réfrigérant en pulvérisant par exemple de l'Azote liquide sur le document fiduciaire.

Le fait que les transferts d'énergie soient dépendants de la température, pour des chélates, n'avait pas encore été découvert .

Sans pouvoir complètement expliquer le phénomène des chélates de Terres Rares à transfert d'énergie, le demandeur constate que, par exemple dans le cas du chélate de Terbium-Europium de l'exemple 1, à température ambiante, l'absorption des rayons Ultra-violets par la partie organique du chélate (le ligand) déclenche la fluorescence, non pas du Terbium, mais de l'Europium présent seulement à hauteur de 10 % des Terres Rares, par une cascade des niveaux d'énergie du Terbium à l'Europium.

Par contre, en baissant la température, de $0°$ C à $4°$ K, ce transfert d'énergie est progressivement bloqué et l'excitation de la partie organique passe uniquement et directement au Terbium, et cela d'autant plus que la température est basse.

4 Spectres de fluorescence ont été faits par le demandeur:

$1°$) Spectre d'un chélate du type de l'exemple 1 mais avec comme Terre Rare uniquement de l'Europium: quelque soit la température, la fluorescence est rouge (typique de l'Europium); il n'y a donc pas de transfert d'énergie dans ce chélate.

$2°$) Spectre d'un chélate du type de l'exemple 1 mais avec comme Terre Rare uniquement du Terbium: quelque soit la température, la fluorescence est verte (typique du Terbium); il n'y a donc pas de transfert d'énergie dans ce chélate.

$3°$)Spectre du chélate de l'exemple 1 (90% Terbium-10% Europium): à température ambiante (20° C) la fluorescence est rouge (typique de l'Europium) et celle du Terbium a totalement disparu.

$4°$) Spectre du chélate ci-dessus en baissant progressivement la température de 20° C à 4° K : le demandeur a constaté une diminution très sensible de la fluorescence de l'Europium dès 0° C au profit de l'apparition de la fluorescence du Terbium et cette inversion des longueurs d'onde de fluorescence devient pratiquement totale à 77° K.

Dans l'état actuel de ses recherches, le demandeur pense avoir ainsi obtenu dans des chélates de Terres Rares un effet de transfert d'énergie assisté thermiquement, effet inconnu à ce jour dans ces chélates.

Pour obtenir cet effet, les règles à respecter sont que:

- les niveaux d'énergie des Terres Rares sans toutefois coincidés, soient assez proches les uns des autres, car les basses températures diminueraient la distance de transfert entre ces niveaux par un phenomène d'élargissement du niveau de transfert de chaque Terre Rare.

- les ligands utilisés dans la constitution de ces chélates absorbent les U.V. et transmettent efficacement cette énergie aux Terres Rares en déclenchant la fluorescence de ces Terres Rares; dans les exemples cités, les ligands utilisés sont des Bèta-Dicétones et constituent une classe préférée de ligand dans le cadre de cette invention, mais d'autres ligands que les Bèta-Dicétones pourront être utilisés par l'homme de l'art sans sortir du cadre de cette invention.

- les proportions respectives des Terres Rares soient fixées en fonction de la température à laquelle on peut descendre, c'est à dire que si l'on prend le chélate de l'exemple 1 (Tb-Eu), on choisira de faire un chélate avec 99% de Tb et 1% d'Eu si on veut obtenir la fluorescence verte du Tb dès 0° C, alors que en mettant 50% de Tb et 50% d'Eu on n'obtiendra cette fluorescence verte qu'avec des températures de l'ordre de 77° K; à titre de règle générale, on peut dire que moins on met d'Eu, plus tôt apparaitra la fluorescence du Tb en baissant la température, et cette règle s'applique non seulement pour les exemples cités, mais aussi pour les réalisations dans lesquelles l'homme de l'art utilisera d'autres combinaisons de Terres Rares et d'autres ligands.

Pour illustrer un des avantages de cette invention par rapport à l'art antérieur, on peut obtenir un effet simultanément chromotrope et thermotrope très satisfaisant en vue d'éviter les imitations et contrefaçons. On peut ajouter au bain de teinture des fibres de polyamide de l'exemple 2, 1% en poids (par rapport au poids des fibres à teindre) de colorant pour polyamide, par exemple du Bleu Telon K GGL 200% de BAYER®, et obtenir ainsi des fibres de sécurité présentant un très haut niveau de sécurité car elles cumuleront un effet chromotrope à un effet thermotrope; en effet ces fibres de sécurité pourront changer 3 fois de couleur:

- une première fois, à température ambiante, de couleur bleu à la lumière solaire ou artificielle, elles deviendront fluorescentes rouge sous les U.V.;
- une deuxième fois, à la température de 4° K, de couleur bleu à la lumière solaire ou artificielle, elles deviendront fluorescentes vert sous les U.V.;
- une troisième fois, à une température comprise entre les 2 précédentes et choisie en fonction de la composition en Terres Rares du chélate, de couleur bleu à la lumière solaire ou artificielle, elles deviendront, sous les U.V., fluorescentes dans une couleur orangée, tirant soit vers le rouge, soit vers le vert, selon extrèmement la température retenue pour effectuer cette procédure d'authentification.

Un document fiduciaire comportant un tel effet chromotrope et thermotrope sera extrèmement difficile à contrefaire ou imiter, et la découverte de cet effet sera difficilement faite par le faussaire qui ne pourra disposer des moyens techniques nécessaires à la mesure de la fluorescence à très basse température.

On peut aussi, au lieu de teindre des fibres de sécurité comme dans l'exemple 2, choisir d'introduire un chélate à transfert d'énergie dans la masse de filage de filaments continus extrudés, et couper ultérieurement ces filaments en fibres de sécurité, ou bien les torsader en fils à coudre.

## Revendications

1. Procédé d'identification ou d'authentification d'un élément, tel qu'un document fiduciaire, par excitation par des rayons ultra-violets, d'un système fluorescent incorporé dans cet élément, ledit système comportant un ou plusieurs chélates d'au moins deux Terres Rares différentes, caractérisé en ce qu'il consiste à faire varier la température dudit système fluorescent de façon à provoquer un changement de la longueur d'onde de fluorescence dudit système fluorescent.

2. Procédé selon la revendication 1, caractérisé en ce que la variation de température précitée est effectuée dans la plage variant entre -273° C et +50° C.

3. Procédé selon la revendication 1 ou 2, caractérisé en ce qu'il comporte en outre la détection qualitative et quantitative des longueurs d'ondes de fluorescence dudit élément à authentifier au moyen d'un dispositif électro-optique.

4. Procédé selon l'une des revendications précédentes, caractérisé en ce que les chélates précités sont constitués, pour la partie organique d'une β-dicétone, et pour la partie minérale, d'au moins deux Terres Rares distinctes choisies dans le groupe des Lanthanides, ainsi que l'Yttrium et le Thorium.

5. Procédé selon la revendication 4, caractérisé en ce que les Terres Rares précitées correspondent à l'une des associations suivantes :
   . Terbium-Europium ;
   . Terbium-Samarium ;
   . Gadolinium-Terbium-Europium ;
   . Gadolinium-Terbium ;
   . Néodyme-Europium.

6. Procédé selon l'une des revendications 1 à 5, caractérisé en ce que le système comportant les chélates précités est réalisé sous la forme d'un vernis ou d'une encre d'impression.

7. Procédé selon l'une des revendications 1 à 5, caractérisé en ce que le système comportant les chélates précités est réalisé sous forme de fibres de sécurité ou de fils textile dans lesquels lesdits chélates sont introduits par un procédé de teinture ou directement dans la masse de filage de filaments continus extrudés ultérieurement coupés en fibres de sécurité ou torsadés en fils textile.

## Claims

1. Method for identifying or authenticating an element, such as a fiduciary document, by excitation by ultraviolet rays, in a fluorescent system incorporated into said element, said system comprising one or more chelates of at least two different rare earths, characterized in that it consists in varying the temperature of said fluorescent system so as to cause a change in the fluorescence wavelength of said fluorescent system.

2. Method according to claim 1, characterized in that said temperature variation ranges between $-273^\circ$ C and $+50^\circ$ C.

3. Method according to claim 1 or 2, characterized in that it further comprises the qualitative and quantitative detection of the fluorescence wavelengths of said elements to be authenticated by using an electro-optical device.

4. Method according to one of the preceding claims, characterized in that said chelates are constituted, for the organic part, of a betadiketone, and for the inorganic part, of at least two separate rare earths selected from the group including lanthanides as well as yttrium and thorium.

5. Method according to claim 4, characterized in that said rare earths correspond to one of the following combinations:
   - terbium-europium;
   - terbium-samarium;
   - gadolinium-terbium-europium;
   - gadolinium-terbium;
   - neodymium-europium.

6. Method according to any one of claims 1 to 5, characterized in that the system comprising said chelates is produced in the form of a varnish or a printing ink.

7. Method according to one of claims 1 to 5, characterized in that the system comprising said chelates is produced in the form of security fibers or textile yarns into which said chelates are introduced by a dyeing method or directly into the extrusion mass of continuously extruded filaments which are subsequently cut into security fibers or twisted into textile yarns.

## Patentansprüche

1. Verfahren zur Identifikation oder Authentifikation eines Elements, wie eines fiduziären Dokuments, durch Erregung eines in diesem Element eingearbeiteten fluoreszierenden Systems mit Ultraviolettstrahlen, welches System ein oder mehrere Chelat(e) von mindestens zwei verschiedenen Seltenen Erden umfaßt, dadurch gekennzeichnet, daß es darin besteht, die Temperatur des fluoreszierenden Systems derart variieren zu lassen, daß eine Änderung der Wellenlänge der Fluoreszenz des fluoreszierenden Systems bewirkt wird.

2. Verfahren nach Anspruch 1, dadurch gekennzeichnet, daß die Temperaturveränderung in einem Bereich zwischen $-273^\circ$ C und $+50^\circ$ C erfolgt.

3. Verfahren nach Anspruch 1 oder 2, dadurch gekennzeichnet, daß es weiters die qualitative und quantitative Ermittlung der Wellenlängen der Fluoreszenz des zu authentifizierenden Elements mittels einer elektrooptischen Einrichtung umfaßt.

4. Verfahren nach einem der vorhergehenden Ansprüche, dadurch gekennzeichnet, daß die genannten Chelate für den organischen Teil aus einem ß-Diketon und für den mineralischen Teil aus mindestens zwei unterschiedlichen Seltenen Erden, ausgewählt aus der Gruppe der Lanthanide sowie Yttrium und Thorium, gebildet sind.

5. Verfahren nach Anspruch 4, dadurch gekennzeichnet, daß die genannten Seltenen Erden einer der folgenden Kombinationen entsprechen:
   . Terbium-Europium;
   . Terbium-Samarium;
   . Gadolinium-Terbium-Europium;
   . Gadolinium-Terbium;
   . Neodym-Europium.

6. Verfahren nach einem der Ansprüche 1 bis 5, dadurch gekennzeichnet, daß das die Chelate umfassende System in Form eines Firnisses oder einer Drucktinte realisiert ist.

7. Verfahren nach einem der Ansprüche 1 bis 5, dadurch gekennzeichnet, daß das die Chelate umfassende System in Form von Sicherheitsfasern oder Textilgarnen realisiert ist, in welche die Chelate mittels eines Färbeverfahrens oder direkt in die Spinnmasse von extrudierten Endlosfilamenten, die später zu Sicherheitsfasern geschnitten oder zu Textilgarnen verdrillt werden, eingebracht werden.